# EUROPÄISCHE PATENTSCHRIFT

(11) **EP 3 753 391 B1**
(45) Veröffentlichungstag und Bekanntmachung des Hinweises auf die Patenterteilung: **26.01.2022**
(21) Anmeldenummer: 20161719.8
(22) Anmeldetag: 09.03.2020
(51) Int. Cl.: A01D 61/04, A01D 41/127

(54) **SCHICHTHÖHENWALZE IM EINZUGSKANAL MIT GUMMILAGERAUFHÄNGUNG**
MATERIAL FEED HEIGHT ROLLER IN FEED CHANNEL WITH RUBBER BEARING MOUNTING
ROULEAU DE HAUTEUR DE COUCHE DANS LE CANAL D'ENTRÉE À SUSPENSION DE PALIER EN CAOUTCHOUC

(30) Priorität: 18.06.2019 DE 102019116452
(43) Veröffentlichungstag der Anmeldung: 23.12.2020
(73) Patentinhaber: CLAAS Selbstfahrende Erntemaschinen GmbH, 33428 Harsewinkel (DE)
(72) Erfinder: Baumgarten, Joachim, 48361 Beelen (DE); Burbank, Martin, 48231 Warendorf (DE)
(74) Vertreter: CLAAS Gruppe

(56) Entgegenhaltungen:
- EP-A1- 1 321 025
- EP-A1- 1 621 064
- GB-A- 1 371 957
- US-B2- 9 642 309

## Beschreibung

Die Erfindung betrifft eine landwirtschaftliche Erntemaschine mit einer Durchsatzmessvorrichtung zur Ermittlung des Erntegutmassendurchsatzes eines Erntegutflusses nach dem Oberbegriff des Anspruchs 1. Ferner betrifft die vorliegende Anmeldung ein Verfahren zum Verdichten des Ernteguts mittels der landwirtschaftlichen Erntemaschine mit Durchsatzmessvorrichtung gemäß dem Oberbegriff des Anspruchs 12. Landwirtschaftliche Erntemaschinen weisen regelmäßig Durchsatzmessvorrichtungen zur Ermittlung des Erntegutmassendurchsatzes auf. Insbesondere Mähdrescher erfassen den Erntegutmassendurchsatz im Bereich des Einzugskanals um unter anderen ihre Maschinenparameter zu optimieren, Maßnahmen zur Erhöhung oder Reduzierung des Erntegutmassendurchsatzes vorzunehmen, die Arbeitsorgane vor Überlast zu schützen und den Erntegutbestand auf dem Feld zu kartieren. Hierfür werden beispielsweise die infolge des Erntegutdurchsatzes resultierenden Auslenkbewegungen der Förderorgane mittels Tastorganen erfasst. Im speziellen bedeutet dies beispielsweise, dass eine Walze in Wirkverbindung mit der Förderkette des Schrägförderers steht und die Auslenkung der Walze gemessen und ausgewertet wird. Solche Walzen werden beweglich entlang der Förderkette geführt. An den Wellenenden der Walze werden diese häufig mit Kugellagern gelagert und Federanordnungen vorgesehen, beispielsweise in Form einer Spiralfeder, die die Walze gegen das Förderband verspannen.

Aus der DE4311054 ist eine Vorrichtung bekannt, die im Schrägförderkanal einer landwirtschaftlichen Erntemaschine eine Messvorrichtung zur Ermittlung des Erntegutmassendurchsatzes aufweist. Den antreibbaren Förderketten des Schrägförderkanals werden zur Ermittlung des Erntegutmassendurchsatzes federnden Taster zugeordnet, welche die Auslenkbewegungen der Förderketten erfassen.

Eine ähnliche Messvorrichtung offenbart die EP1023826. Hier wird der Erntegutmassendurchsatz eines Feldhäckslers mittels einer auslenkbaren Vorpresswalze ermittelt, die mit einer ortsfesten Vorpresswalze zusammenwirkt, wobei der Abstand zwischen den Vorpresswalzen aufgrund des jeweiligen Erntegutdurchsatzes zwischen einer minimalen und maximalen Grenzlage variiert. Die Vorpresswalze wird hierbei mittels einer Federanordnung gegen eine ortsfest gelagerte untere Vorpresswalze gedrückt, wobei die Federanordnung bei größer werdendem Abstand der Vorpresswalzen den Druck auf das Durchsatzmaterial erhöht. Dieser Abstand wird mit einer Abstandsmessvorrichtung erfasst und das Messergebnis für die Ermittlung des Erntegutmassendurchsatzes verwendet.

Derartigen Messvorrichtungen liegt das Problem zugrunde, dass Tastorgane, die mit einer Federanordnung gelagert sind, zu starken Schwingungen neigen. Dies kann zu einem ungenauen Messergebnis und im schlimmsten Fall zu einem Ausfall der Sensoren führen, welche als Potentiometer ausgeführt sein können, die nicht für die aus den starken Schwingungen resultierenden hohen Drehraten ausgelegt sind.

Weiterhin werden für die Federanordnung viele Komponenten benötigt, die mit hohen Kosten verbunden sind sowie einen erhöhten Bauraumbedarf benötigen. Zusätzlich kommt es an den Drehpunkten der mechanischen Anordnung zur Lagerung der Tastorgane zu erhöhten Verschleißerscheinungen.

Es ist deshalb Aufgabe der Erfindung, die beschriebenen Nachteile des Standes der Technik zu vermeiden, indem eine schwingungsreduzierte, kostengünstigere sowie platzsparende Lagerung des Tastorgans bereitgestellt wird.

Diese Aufgabe wird erfindungsgemäß durch die kennzeichnenden Merkmale des Anspruchs 1 gelöst. Weitere vorteilhafte Ausgestaltungen sind den abhängigen Ansprüchen 2 bis 11, der Beschreibung und den Figurendarstellungen zu entnehmen.

Gemäß dem Anspruch 1 wird eine landwirtschaftliche Erntemaschine mit einer Durchsatzmessvorrichtung zur Ermittlung des Erntegutmassendurchsatzes eines Erntegutflusses in der landwirtschaftlichen Erntemaschine, insbesondere einem Mähdrescher vorgeschlagen, wobei die Erntemaschine wenigstens ein Tastorgan aufweist, das mit einem Förderorgan zusammenwirkt, wobei das Förderorgan in Abhängigkeit von dem jeweiligen Erntegutdurchsatz eine Auslenkbewegung durchführt, wobei das zumindest eine Tastorgan durch eine Auslenkbewegung des Förderorgans ebenfalls ausgelenkt wird, wobei die Auslenkung des zumindest einen Tastorgans sensorisch erfasst wird. Erfindungsgemäß ist vorgesehen, dass das zumindest eine Tastorgan an zumindest einem Tragarm gelagert ist, wobei der zumindest eine Tragarm mittels zumindest einem drehelastischen Torsionselement verschwenkbar gelagert ist. Die Lagerung des Tastorgans mit dem Tragarm der wiederum mit einem drehelastischen Torsionselement verschwenkbar gelagert ist, ermöglicht eine platzsparende sowie kostengünstigere Auslegung der Durchsatzmessvorrichtung. In besonders vorteilhafter Weise kann das Torsionselement als ein Verbundelement aus Metall und Gummi oder Metall und Polyurethan-Elastomer ausgeführt sein. Der Vorteil derartiger Torsionselemente besteht in ihren dämpfenden Eigenschaften, die zu einer Reduktion der Schwingungen des Tastorgans führen und somit die genannten Messungenauigkeiten reduzieren oder ein Ausfallen der Sensoren vermeiden.

In einer vorteilhaften Ausführung umfasst die landwirtschaftliche Erntemaschine einen Schrägförderer, wobei das Förderorgan im Schrägförderer angeordnet ist und dem Transport des von der Erntemaschine aufgenommenen Ernteguts dient. In einem Schrägförderer bietet sich die Anordnung der Durchsatzmessvorrichtung an, da dieser ausreichend Platz für die Durchsatzmessvorrichtung aufweist und ein Bestimmen des Erntegutmassendurchsatzes möglich ist, bevor das Erntegut den Arbeitsorganen der Erntemaschine zugeführt wird. Bevorzugt kann das Förderorgan zumindest eine antreibbare Förderkette sein, da die vom Erntegut hervorgerufenen Auslenkungen an einer Förderkette mittels der vorgeschlagenen Durchsatzmessvorrichtung besonders gut ermittelbar sind.

Vorteilhafterweise kann das Tastorgan als eine Schichthöhenwalze ausgestaltet sein, sodass ein abtasten eines größeren Bereiches des Förderorgans mit einem Tastorgan möglich ist. Weiterhin ist vorgesehen, dass der Tragarm mittels des drehelastischen Torsionselements direkt oder indirekt am Schrägförderer befestigt ist, damit bei einer Relativbewegung der mit dem Schrägförderer verbundenen Elemente das Tastorgan in seiner vorgesehenen Position verbleibt.

In einer vorteilhaften Ausgestaltung ist das Tastorgan dem unteren, fördernden Lasttrum der Förderkette zugeordnet, um eine direkte Messung der vom Erntegutfluss verursachten Auslenkungen der Förderkette zu ermöglichen. Es wäre jedoch auch möglich das Tastorgan dem Leertrum zuzuordnen und mit diesem die Spannung der Förderkette zu messen und den Messwert für die Ermittlung des Erntegutmassendurchsatzes zu verwenden.

Dabei kann sich der zumindest eine Tragarm ausgehend von dem Tastorgan in Richtung des Erntegutflusses oder entgegen der Richtung des Erntegutflusses erstrecken, sodass dass Tastorgan entweder gezogen oder geschoben wird.

Insbesondere kann das drehelastische Torsionselement als Gummifederelement ausgebildet sein, dieses hat den Vorteil, dass es nahezu verschleißfrei das Verschwenken des Tragarmes im vorgesehenen Messbereich ermöglicht sowie ein Vorspannen durch ein verdrehen des inneren Lagerkäfigs relativ zum äußeren Lagerkäfig ermöglicht. Weitere besondere Vorteile eines Gummifederelements sind, dass diese eine steile Kraft-Wegkennlinie aufweisen können, welches kleine Bauräume ermöglicht. Weiterhin kann je nach Ausführungsform die Federkennlinie linear, progressiv oder degressiv oder eine Mischform dessen sein. Ein degressiver Verlauf ermöglicht beispielsweise aus der Nullpunktslage heraus eine steile Federkennlinie, die bei geringen Verformungen bereits eine große Rückstellkraft bewirkt und bei größeren Verdrehwinkel abflacht, welches sich günstig auf die Betriebsbedingungen auswirken kann. Vorteilhaft ist ebenfalls, dass Gummifederelemente dämpfende Eigenschaften besitzen, welche höherfrequente sowie kurzwellige Höhenbewegungen der Schichthöhenwalze dämpfen.

In einer vorteilhaften Ausgestaltung weist das Gummifederelement einen eckigen, insbesondere viereckigen, äußeren Lagerkäfig auf, der einen eckigen, insbesondere viereckigen, inneren Lagerkäfig umfasst, wobei sich im Innenraum im Bereich der Ecken des äußeren Lagerkäfigs ein elastisch verformbares Material als federndes Element, insbesondere Gummi, befindet, welches zugleich Verbindung und Abstützung zwischen dem äußeren Lagerkäfig und dem inneren Lagerkäfig ist. Hierdurch kann beim Verdrehen des äußeren Lagerkäfigs relativ zum inneren Lagerkäfigs eine Rückstellkraft erzeugt werden.

Vorteilhafterweise weist der äußere Lagerkäfig des Gummifederelements eine äußere untere Lagerkäfigstruktur und eine äußere obere Lagerkäfigstruktur auf, welche mit Verbindungselementen miteinander verbunden sind, sodass eine vereinfachte Montage des Gummifederelements mit dem dazugehörigen inneren Lagerkäfig sowie dem elastisch verformbaren Material gewährleistet ist.

Die Durchsatzmessvorrichtung kann zumindest ein Führungselement aufweisen, welches das Tastorgan entlang des vorgesehenen Auslenkbereichs führt. Dies dient der Vermeidung von Bewegungen quer zur vorgesehenen Verschwenkrichtung des Tragarmes und dem Führen des Tastorgans entlang des vorgesehenen Messbereichs. Das Führungselement kann weiterhin einen unteren Anschlag aufweisen, durch den das Verschwenken des Tastorgans in Richtung des Förderorgans eingeschränkt wird. Ein weiterer oberer Anschlag am Führungselement, der das Verschwenken des Tastorgans in entgegengesetzter Richtung zum Förderorgan begrenzt, kann ebenfalls vorgesehen sein.

Gemäß dem Anspruch 12 wird ein Verfahren zum Verdichten des Ernteguts der aus dem Anspruch 1 bekannten landwirtschaftlichen Erntemaschine mit Durchsatzmessvorrichtung vorgeschlagen, bei dem zumindest ein drehelastisches Torsionselement manuell oder automatisch vorgespannt wird, sodass ein Drehmoment über den zumindest einen Tragarm, das Tastorgan und das Förderorgan auf den Erntegutfluss übertragen wird. Hierdurch kann durch einfache sowie kostengünstige Mittel das Tastorgan zusätzlich zum verdichten des Ernteguts verwendet werden. Das Ausmaß der Vorspannung sowie die Länge des Hebelarms bestimmt bei diesem Verfahren das auf das Erntegut übertragene Moment.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine Seitenansicht des vorderen Aufbaus einer erfindungsgemäßen Erntemaschine mit einem Vorsatzgerät,
- Figur 2: eine Seitenansicht der im Schrägförderer befindlichen Förderkette mit der vorschlagsgemäßen Durchsatzmessvorrichtung,
- Figur 3: eine Schnittansicht des in Figur 2 dargestellten Ausschnittes A der Durchsatzmessvorrichtung,
- Figur 4: eine Seitenansicht des Gummifederelements mit der in Figur 3 gezeigten Blickrichtung A,
- Figur 5: eine Seitenansicht der Vorspanneinrichtung,
- Figur 6: ein Schnittbild der Schichthöhenwalze sowie des Deckels.

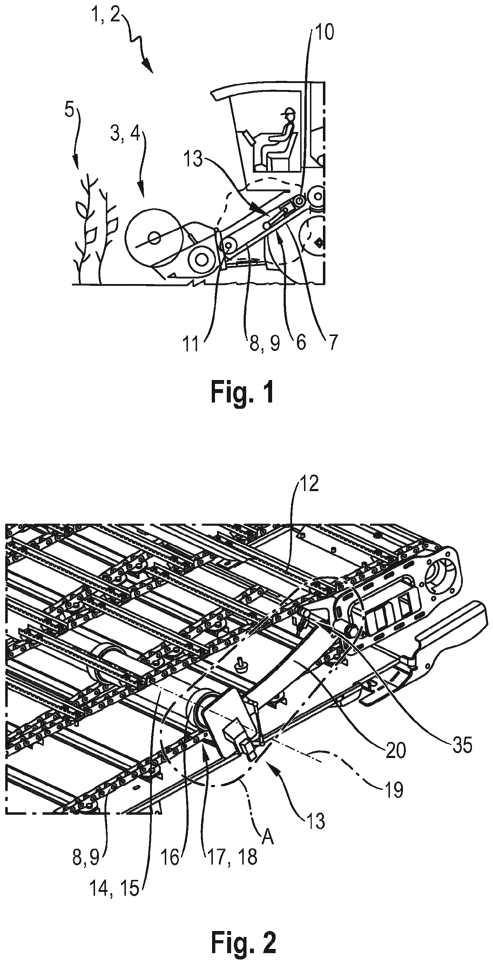

Fig. 1 zeigt den prinzipiellen vorderen Aufbau einer als Mähdrescher 1 ausgeführten Erntemaschine 2. Eine vorschlagsgemäße Erntemaschine 2 weist ein als Erntevorsatz 3 ausgebildetes Schneidwerk 4 zum Schneiden und Aufnehmen von Erntegut auf. Das Schneidwerk 4 ist vorzugsweise austauschbar gegen ein anderes Schneidwerk 4, so dass die Erntemaschine 2 auf das Ernten unterschiedlicher Fruchtarten wie Weizen, Roggen, Hafer, Raps etc. angepasst werden kann. Unter dem Erntegut ist dabei das gesamte, vom Feldbestand 5 aufgenommene Material zu verstehen. Wie in Fig. 1 zu erkennen ist, wird ein Feldbestand 5 durch das Schneidwerk 4 gemäht und das somit gewonnene Erntegut, das unter anderem einen Kornanteil und einen Strohanteil umfasst, einem Schrägförderer 6 zugeführt.

Der Schrägförderer 6 umfasst ein Gehäuse 7 mit einer sich darin befindlichen und als mindestens zwei umlaufend antreibbaren Förderketten 8 ausgebildetes Förderorgan 9. Die Förderketten 8 stehen in Wirkverbindung mit einem erntemaschinenseitigen Antriebsritzel 10 und einer erntevorsatzseitigen Trommel 11, welche am Gehäuse 7 des Schrägförderers 6 angeordnet sind.

Wie in Fig. 2 dargestellt ist, befinden sich zwischen den Förderketten 8 sich quer zu diesen erstreckende Mitnehmerleisten 12. Weiterhin zeigt Fig. 2 eine Durchsatzmessvorrichtung 13 zur Bestimmung eines Erntegutmassendurchsatzes. Diese umfasst ein als Schichthöhenwalze 14 ausgeführtes Tastorgan 15, welches sich quer zu den Förderketten 8 erstreckt. Auf der Schichthöhenwalze 14 sind Kontaktelemente 16 angeordnet, mittels derer die Schichthöhenwalze 14 in Wirkverbindung mit einem unteren Erntegut fördernden Bereich 17 der Förderketten 8 steht, welcher auch als förderndes Lasttrum 18 bezeichnet wird.

Die Schichthöhenwalze 14 ist an ihren äußeren Enden um eine sich quer zu den Förderketten 8 erstreckende Achse 19 drehbar an zwei Tragarmen 20 gelagert.

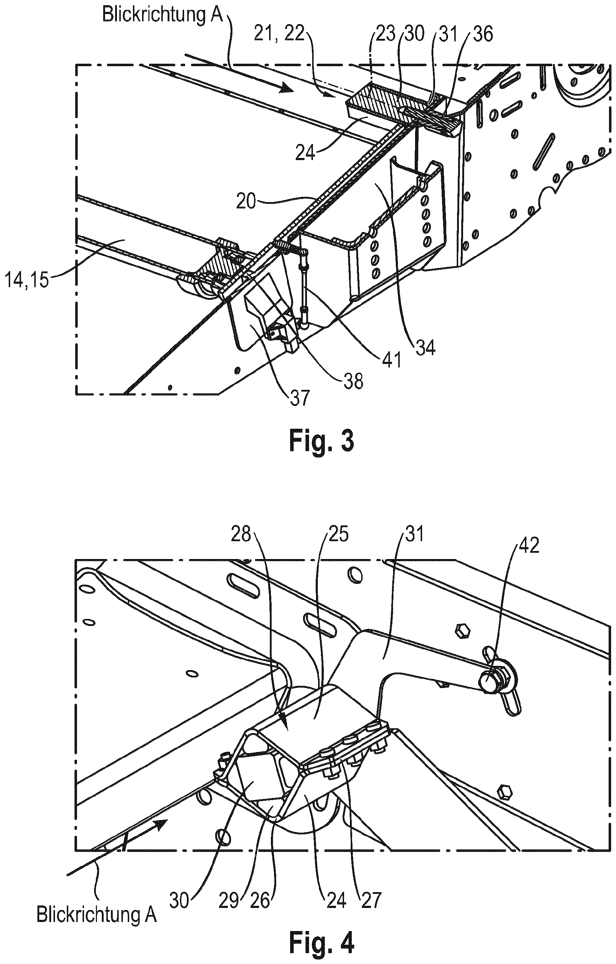

Wie in Fig. 3 dargestellt, erstrecken sich die Tragarme 20 ausgehend von der Schichthöhenwalze 14 längs entlang der Förderketten 8 in Richtung des erntemaschinenseitigen Antriebsritzels 10 und sind in ihren äußeren Bereich mit einem drehelastischen Torsionselement 21, welches als Gummifederelement 22 ausgebildet ist, um eine sich parallel zur Schichthöhenwalze 14 erstreckende Achse 23 verschwenkbar gelagert.

Wie Fig. 4 zeigt, weißt das Gummifederelement 22 eine äußere untere Lagerkäfigstruktur 24 sowie eine äußere obere Lagerkäfigstruktur 25 auf, die jeweils aus einer rechtwinkligen Struktur mit einer im Bereich des rechten Winkels abgerundeten Kante 26 sowie an ihren äußeren Enden der Längsseite jeweils einen Flansch 27 aufweisen. Am jeweiligen Flansch 27 sind die äußere untere Lagerkäfigstruktur 24 und die äußere obere Lagerkäfigstruktur 25 miteinander verschraubt und bilden zusammen den äußeren Lagerkäfig 28 des Gummifederelements 22.

Die Tragarme 20 sind an der äußeren unteren Lagerkäfigstruktur 24 des Gummifederelements 22 verschweißt.

Der äußere Lagerkäfig 28 des Gummifederelements 22 nimmt in seinem Innenraum das elastisch verformbare Material als federndes Element 29 auf, welches zugleich Verbindung und Abstützung zwischen dem äußeren Lagerkäfig 28 und einem inneren Lagerkäfig 30 ist.

Der innere Lagerkäfig 30 geht in seiner Längserstreckung über das Ende des äußeren Lagerkäfigs 28 hinaus und ist in diesem Bereich mit einem Vorspannhebel 31 drehfest verbunden, beispielsweise verschweißt.

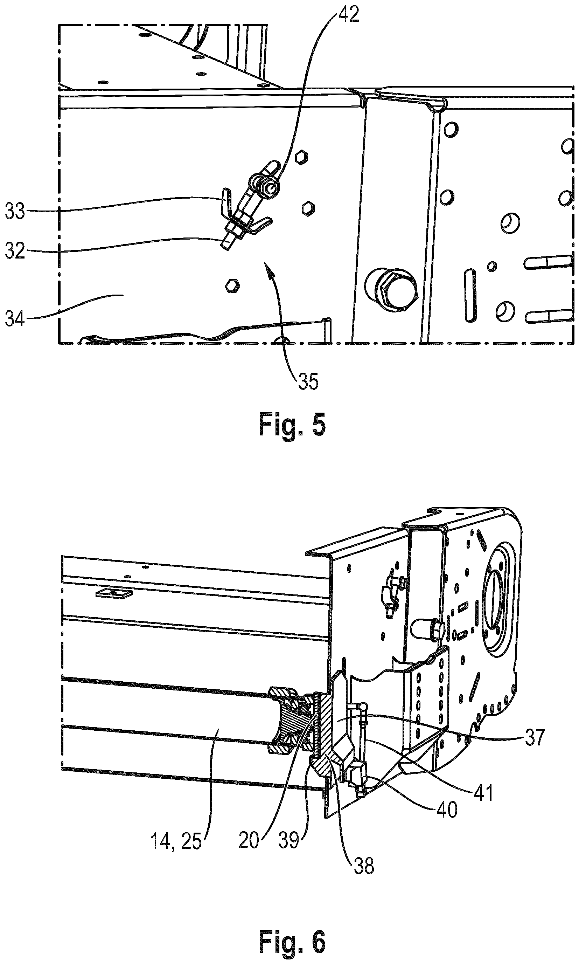

Der Vorspannhebel 31 ist an seinem äußeren Bereich mit einer in Fig. 5 gezeigten Verstellschraube 32 drehbeweglich mit einer Schraube 42 verschraubt, wobei die Verstellschraube 32 mittels zweier Schraubenmuttern mit einem Flansch 33 verbunden ist, welcher sich an einem seitlichen Element 34 des Schrägförderers 6 befindet.

Der Vorspannhebel 31 sowie die mit dem Flansch 33 verbundene Verstellschraube 32 bilden eine Vorspanneinrichtung 35. Ein verdrehen der beiden Schraubenmuttern mittels derer der Flansch 33 sowie die Verstellschraube 32 verbunden sind, resultiert über den Vorspannhebel 31 in einer Drehbewegung des inneren Lagerkäfigs 30.

Weiterhin ist der innere Lagerkäfig 30 am äußeren Ende mit einer von Fig. 3 gezeigten Buchse 36 verschraubt. Die Buchse 36 ist an einem seitlichen Element 34 des Schrägförderers 6 festgelegt, beispielsweise verschweißt.

Wie Fig. 6 zeigt, umfasst die Durchsatzmessvorrichtung 13 einen Deckel 37, der am seitlichen Schrägfördererelement 34 in Verlängerung zur Schichthöhenwalze 14 festgelegt, beispielsweise verschraubt ist. Der Deckel 37 weist ein Führungselement 38 auf, welches den Tragarm 20 bei einem Verschwenken um die Achse 23 des Gummifederelements 22 seitlich führt. Weiterhin ist ein unterer Anschlag 39 vorgesehen, der die Bewegungsfreiheit der Schichthöhenwalze 14 in Richtung seiner Wirkverbindung mit den Förderketten 8 einschränkt, sodass die Schichthöhenwalze 14 mittels der Tragarme 20 und der Vorspanneinrichtung 35 gegen den unteren Anschlag 39 vorgespannt werden kann. Die sich ergebene Vorspannung dient dem Verdichten des Ernteguts sowie dem verspannen des Tastorgans 15 mit dem Förderorgan 9.

Weiterhin ist am Deckel 37 ein Sensor 40 angeordnet, welcher als Potentiometer ausgeführt ist. Dieser ist über einen Messtaster 41 mit dem Tragarm 20 verbunden und erfasst die Auslenkung des Tragarmes 20 und somit die Auslenkung der Schichthöhenwalze 14, welche für die Ermittlung des Erntegutmassendurchsatzes verwendet werden.

Analog zu dem in Fig. 6 dargestellten Deckel 37 befindet sich ein in den Zeichnungen nicht dargestellter baugleicher Deckel 37 auf der gegenüberliegenden Seite des Schrägförderers 6.

**Bezugszeichenliste:**

| | | | |
|---|---|---|---|
| 1 | Mähdrescher | 29 | Federndes Element |
| 2 | Erntemaschine | 30 | Innerer Lagerkäfig |
| 3 | Erntevorsatz | 31 | Vorspannhebel |
| 4 | Schneidwerk | 32 | Verstellschraube |
| 5 | Feldbestand | 33 | Flansch Schrägförderelement |
| 6 | Schrägförderer | 34 | Seitliches Element Schrägförderer |
| 7 | Gehäuse Schrägförderer | 35 | Vorspanneinrichtung |
| 8 | Förderkette | 36 | Buchse |
| 9 | Förderorgan | 37 | Deckel |
| 10 | Antriebsritzel | 38 | Führungselement |
| 11 | Trommel | 39 | Anschlag |
| 12 | Mitnehmerleisten | 40 | Sensor |
| 13 | Durchsatzmessvorrichtung | 41 | Messtaster |
| 14 | Schichthöhenwalze | 42 | Schraube |
| 15 | Tastorgan | | |
| 16 | Kontaktelement | | |
| 17 | Erntegut fördernder Bereich der | | |
| | Förderkette | | |
| 18 | Förderndes Lasttrum | | |
| 19 | Achse Schichthöhenwalze | | |
| 20 | Tragarm | | |
| 21 | Drehelastisches Torsionselement | | |
| 22 | Gummifederelement | | |
| 23 | Achse Gummifederelement | | |
| 24 | Äußere untere Lagerkäfigstruktur | | |
| 25 | Äußere obere Lagerkäfigstruktur | | |
| 26 | Abgerundete Kante | | |
| 27 | Flansch Lagerkäfigstruktur | | |
| 28 | Äußerer Lagerkäfig | | |

## Patentansprüche

1. Landwirtschaftliche Erntemaschine (2) mit einer Durchsatzmessvorrichtung (13) zur Ermittlung des Erntegutmassendurchsatzes eines Erntegutflusses in der landwirtschaftlichen Erntemaschine (2), insbesondere einem Mähdrescher (1), wobei die Erntemaschine (2) wenigstens ein Tastorgan (15) aufweist, das konfiguriert ist, mit einem Förderorgan (9) zusammenzuwirken, wobei das Förderorgan (9) konfiguriert ist, in Abhängigkeit von dem jeweiligen Erntegutdurchsatz eine Auslenkbewegung durchzuführen, wobei das zumindest eine Tastorgan (15) durch eine Auslenkbewegung des Förderorgans (9) ebenfalls ausgelenkt wird, wobei die Auslenkung des zumindest einen Tastorgans (15) sensorisch erfasst wird, wobei das zumindest eine Tastorgan (15) an zumindest einen Tragarm (20) gelagert ist, **dadurch gekennzeichnet, dass** der zumindest eine Tragarm (20) mittels zumindest einem drehelastischen Torsionselement (21) verschwenkbar gelagert ist.

2. Landwirtschaftliche Erntemaschine (2) nach Anspruch 1, **dadurch gekennzeichnet, dass** die landwirtschaftliche Erntemaschine (2) einen Schrägförderer (6) umfasst, wobei das Förderorgan (9) im Schrägförderer (6) der Erntemaschine (2) angeordnet ist.

3. Landwirtschaftliche Erntemaschine (2) nach Anspruch 1 oder 2 **dadurch gekennzeichnet, dass** das Förderorgan (9) zumindest eine umlaufend antreibbare Förderkette (8) ist.

4. Landwirtschaftliche Erntemaschine (2) nach einem der Ansprüche 1 bis 3, **dadurch gekennzeichnet, dass** das Tastorgan (15) eine Schichthöhenwalze (14) ist.

5. Landwirtschaftliche Erntemaschine (2) nach einem der Ansprüche 1 bis 4, **dadurch gekennzeichnet, dass** der Tragarm (20) mittels des drehelastischen Torsionselements (21) direkt oder indirekt am Schrägförderer (6) befestigt ist.

6. Landwirtschaftliche Erntemaschine (2) nach einem der Ansprüche 1 bis 5, **dadurch gekennzeichnet, dass** das Tastorgan (15) dem unteren, fördernden Lasttrum (18) der Förderkette (8) zugeordnet ist.

7. Landwirtschaftliche Erntemaschine (2) nach einem der Ansprüche 1 bis 6, **dadurch gekennzeichnet, dass** der zumindest eine Tragarm (20) sich ausgehend von dem Tastorgan (15) in Richtung des Erntegutflusses oder entgegen der Richtung des Erntegutflusses erstreckt.

8. Landwirtschaftliche Erntemaschine (2) nach einem der Ansprüche 1 bis 7, **dadurch gekennzeichnet, dass** das drehelastische Torsionselement (21) als Gummifederelement (22) ausgebildet ist.

9. Landwirtschaftliche Erntemaschine (2) nach Anspruch 8, **dadurch gekennzeichnet, dass** das Gummifederelement (22) einen eckigen, insbesondere viereckigen, äußeren Lagerkäfig (28) aufweist, der einen eckigen, insbesondere viereckigen, inneren Lagerkäfig (30) umfasst, wobei sich im Innenraum im Bereich der Ecken des äußeren Lagerkäfigs (28) ein elastisch verformbares Material als federndes Element (29), insbesondere Gummi, befindet, welches zugleich Verbindung und Abstützung zwischen dem äußeren Lagerkäfig (28) und dem inneren Lagerkäfig (30) ist.

10. Landwirtschaftliche Erntemaschine (2) nach Anspruch 9, **dadurch gekennzeichnet, dass** der äußere Lagerkäfig (28) des Gummifederelements (22) eine äußere untere Lagerkäfigstruktur (24) und eine äußere obere Lagerkäfigstruktur (25) aufweist, welche mit Verbindungselementen miteinander verbunden sind.

11. Landwirtschaftliche Erntemaschine (2) nach einem der Ansprüche 1 bis 10, **dadurch gekennzeichnet, dass** die Durchsatzmessvorrichtung (13) zumindest ein Führungselement (38) umfasst, welches das Tastorgan (15) entlang des vorgesehenen Auslenkbereichs führt.

12. Verfahren zum Verdichten des Ernteguts mittels der aus dem Anspruch 1 bekannten landwirtschaftlichen Erntemaschine (2), **dadurch gekennzeichnet, dass** zumindest ein drehelastisches Torsionselement (21) manuell oder automatisch vorgespannt wird, sodass ein Drehmoment über den zumindest einen Tragarm (20), das Tastorgan (15) und das Förderorgan (9) auf den Erntegutfluss übertragen wird.

## Claims

1. An agricultural harvester (2) comprising a throughput measuring device (13) for ascertaining the crop material mass throughput of a crop material flow in the agricultural harvester (2), in particular a combine harvester, wherein the harvester (2) has at least one sensing member (15) which is configured to cooperate with a conveyor member (9), wherein the conveyor member (9) is configured to perform a deflection movement in dependence on the respective crop material throughput, wherein the at least one sensing member (15) is also deflected by a deflection movement of the conveyor member (9), wherein the deflection of the at least one sensing member (15) is detected by sensor means, wherein the at least one sensing member (15) is mounted to at least one carrier arm (20),
**characterised in that** the at least one carrier arm (20) is mounted pivotably by means of at least one rotationally elastic torsion element (21).

2. An agricultural harvester (2) according to claim 1 **characterised in that** the agricultural harvester (2) includes an inclined conveyor (6), wherein the conveyor member (9) is arranged in the inclined conveyor (6) of the harvester (2).

3. An agricultural harvester (2) according to claim 1 or claim 2 **characterised in that** the conveyor member (9) is at least a circulatingly drivable conveyor chain (8).

4. An agricultural harvester (2) according to one of claims 1 to 3 **characterised in that** the sensing member (15) is a layer height roller (14).

5. An agricultural harvester (2) according to one of claims 1 to 4 **characterised in that** the carrier arm (20) is directly or indirectly fixed to the inclined conveyor (6) by means of the rotationally elastic torsion element (21).

6. An agricultural harvester (2) according to one of claims 1 to 5 **characterised in that** the sensing member (15) is associated with the lower conveying load run (18) of the conveyor chain (8).

7. An agricultural harvester (2) according to one of claims 1 to 6 **characterised in that** the at least one carrier arm (20) extends from the sensing member (15) in the direction of the crop material flow or in opposite relationship to the direction of the crop material flow.

8. An agricultural harvester (2) according to one of claims 1 to 7 **characterised in that** the rotationally elastic torsion element (21) is in the form of a rubber spring element (22).

9. An agricultural harvester (2) according to claim 8 **characterised in that** the rubber spring element (22) has an angular, in particular quadrangular, outer bearing cage (28) which includes an angular, in particular quadrangular, inner bearing cage (30), wherein disposed in the internal space in the region of the corners of the outer bearing cage (28) is an elastically deformable material as the spring element (29), in particular rubber, which at the same time is the connection and support between the outer bearing cage (28) and the inner bearing cage (30).

10. An agricultural harvester (2) according to claim 9 **characterised in that** the outer bearing cage (28) of the rubber spring element (22) has an outer lower bearing cage structure (24) and an outer upper bearing cage structure (25) which are connected together with connecting elements.

11. An agricultural harvester (2) according to one of claims 1 to 10 **characterised in that** the throughput measuring device (13) includes at least one guide element (38) which guides the sensing member (15) along the intended deflection region.

12. A method of compacting the crop material by means of the agricultural harvester (2) known from claim 1, **characterised in that** the at least one rotationally elastic torsion element (21) is manually or automatically prestressed so that a torque is transmitted to the crop material flow by way of the at least one carrier arm (20), the sensing member (15) and the conveyor member (9).

## Revendications

1. Machine agricole de récolte (2) comprenant un dispositif de mesure de débit (13) pour déterminer le débit massique de produit récolté d'un flux de produit récolté dans la machine agricole de récolte (2), en particulier dans une moissonneuse-batteuse (1), la machine de récolte (2) comportant au moins un organe palpeur (15) qui est configuré pour coopérer avec un organe d'amenée (9), l'organe d'amenée (9) étant configuré pour réaliser un mouvement de déviation en fonction du débit de produit récolté respectif, le au moins un organe palpeur (15) étant également dévié par un mouvement de déviation de l'organe d'amenée (9), la déviation du au moins un organe palpeur (15) étant détectable par capteurs, le au moins un organe palpeur (15) étant monté sur au moins un bras porteur (20), **caractérisée en ce que** le au moins un bras porteur (20) est monté pivotant au moyen d'au moins un élément de torsion élastique en rotation (21).

2. Machine agricole de récolte (2) selon la revendication 1, **caractérisée en ce que** la machine agricole de récolte (2) inclut un convoyeur incliné (6), l'organe d'amenée (9) étant disposé dans le convoyeur incliné (6) de la machine de récolte (2).

3. Machine agricole de récolte (2) selon la revendication 1 ou 2, **caractérisée en ce que** l'organe d'amenée (9) est au moins une chaîne d'alimentation entraînable de manière tournante (8) .

4. Machine agricole de récolte (2) selon une des revendications 1 à 3, **caractérisée en ce que** l'organe palpeur (15) est un rouleau de hauteur de couche (14).

5. Machine agricole de récolte (2) selon une des revendications 1 à 4, **caractérisée en ce que** le bras porteur (20) est fixé directement ou indirectement au convoyeur incliné (6) au moyen de l'élément de torsion élastique en rotation (21) .

6. Machine agricole de récolte (2) selon une des revendications 1 à 5, **caractérisée en ce que** l'organe palpeur (15) est associé au brin en charge inférieur amenant (18) de la chaîne d'alimentation (8).

7. Machine agricole de récolte (2) selon une des revendications 1 à 6, **caractérisée en ce que** le au moins un bras porteur (20) s'étend à partir de l'organe palpeur (15) dans la direction du flux de produit récolté ou à l'encontre de la direction du flux de produit récolté.

8. Machine agricole de récolte (2) selon une des revendications 1 à 7, **caractérisée en ce que** l'élément de torsion élastique en rotation (21) est conformé en élément de ressort en caoutchouc (22) .

9. Machine agricole de récolte (2) selon la revendication 8, **caractérisée en ce que** l'élément de ressort en caoutchouc (22) comporte une cage de support extérieure angulaire, en particulier quadrangulaire, (28) qui inclut une cage de support intérieure angulaire, en particulier quadrangulaire, (30), dans l'espace intérieur dans la zone des angles de la cage de support extérieure (28) se trouvant un matériau élastiquement déformable faisant fonction d'élément élastique (29), en particulier en caoutchouc, lequel sert en même temps de liaison et d'appui entre la cage de support extérieure (28) et la cage de support intérieure (30).

10. Machine agricole de récolte (2) selon la revendication 9, **caractérisée en ce que** la cage de support extérieure (28) de l'élément de ressort en caoutchouc (22) comporte une structure de cage de support extérieure inférieure (24) et une structure de cage de support extérieure supérieure (25), lesquelles sont reliées entre elles par des éléments de liaison.

11. Machine agricole de récolte (2) selon une des revendications 1 à 10, **caractérisée en ce que** le dispositif de mesure de débit (13) inclut au moins un élément de guidage (38) qui guide l'organe palpeur (15) le long de la zone de déviation prévue.

12. Procédé de compactage du produit récolté au moyen de la machine agricole de récolte (2) connue de la revendication 1, **caractérisé en ce que** le au moins un élément de torsion élastique en rotation (21) est précontraint manuellement ou automatiquement, de sorte qu'un moment de rotation est transmis au flux de produit récolté par l'intermédiaire du au moins un bras porteur (20), de l'organe palpeur (15) et de l'organe d'amenée (9).
